# EUROPEAN PATENT APPLICATION

(11) **EP 0 700 802 A1**
(43) Date of publication of application: **13.03.1996**
(21) Application number: 94306645.6
(22) Date of filing: 09.09.1994
(51) Int. Cl.: B60J 7/14, B60P 1/16, B60P 1/28

(54) **Articulated cover for a top loading hauling body**

(71) Applicant: CATERPILLAR INC., Peoria Illinois 61629-6490 (US)
(72) Inventor: James, Barry Edward, Hartlepool, Cleveland TS27 4NP (GB)
(74) Representative: Jackson, Peter Arthur

(57) **Abstract**

Trucks which haul waste and fine, loose materials which are top loading through an open top need a cover to retain the material such as during travel. A full length cover, when raised for loading, may adversely affect the stability of the truck. An articulated cover (84) includes a forward portion (92) pivotally connected to the truck (10) hauling body (24) and a rearward portion (94) pivotally connected to the forward portion (92). When the forward portion (92) is raised the rearward portion (94) folds downward against and parallel to the forward portion (92). This substantially reduces the height of the raised articulated cover (84). When the articulated cover (84) is in the fully open position the forward portion (92) is tilted forwardly beyond vertical an amount sufficient to provide loading access to substantially all of the open top (38) of the hauling body (24). Tie members (100) are connected to a pair of brackets (96) and integral guide members (104) secured to the rearward portion (94) of the articulated cover (84) and to the hauling body (24). When the articulated cover (84) is open the tie members (100) engage tie guide members (104) on the cover to cause the rearward portion (94) to unfold to an extended position when the forward portion (92) is pivoted toward a closed position. This structure permits the articulated cover (84), when closed, to extend the full length of the open top (38) of the hauling body (24) and yet provide reduced height without substantially obstructing loading access to the open top (38) of the hauling body (24) when in the open position.

## Description

This invention relates generally to a top loading, hauling body and more particularly to a top cover adapted to be pivotally attached to a hauling body.

In machines having top loading, hauling bodies it is desirable to provide a pivoting cover to retain the load in the body during travel of the machine. Otherwise, loads of material such as waste, grain, sand, dirt and other fine material tend to be blown from the body by air currents resulting from ambient winds, air flow due to the speed of the machine or both. This is objectionable due to loss of a portion of the payload as well as undesirable deposit of the material on the roadway and adjacent property.

Thus for various reasons closure means are desirable to prevent loss of material from open-topped truck bodies.

In currently known machines it is common practice to provide various covers or doors over openings in the body to retaining the payload within the body during transit and until the operator is ready to dump the load. In most cases, however, the covers open automatically responsive to tilting of the body or must be opened by power means, such as hydraulic cylinders, to permit the payload to exit the body as it is pivoted to the dumping position. In many instances opening of the cover during dumping raises the center of gravity of the machine an amount sufficient to cause instability of the machine. This change in the position of the center of gravity may contribute to an overturning moment if the machine is on a side incline or is moving as the load is being dumped.

U.S. Patent 2,941,682 issued 21 June 1954, to C.R. Keys, U.S. Patent 3,913,969 issued 21 October 1975, to N.R. Hoch, USSR Patents 1,268,448 issued 7 November 1986, and USSR Patent 281,057 issued 3 December 1970, show various dump bodies having covers associated with openings therein. In all of these instances it is indicated that the covers must be in an open position when the body is tilted for dumping of the load therefrom.

Thus it is desirable to provide a dump body having a cover which may remain closed when the body is tilted for dumping. This maintains a relatively low center of gravity of the machine to enhance stability of the machine when the body is tilted for dumping of the load. It is also desirable to maintain a relatively low center of gravity during a top loading exercise during which the cover must be open.

It is also of particular importance to pivot the articulated cover forwardly an amount sufficient, when open, to permit loading access to substantially all of the open top of body.

An articulated cover is adapted for pivotal connection on a top loading, hauling body for pivoting between open and closed positions when installed thereon.

The articulated cover includes a forward portion having an inner surface, a rearward portion having an inner surface and being pivotally connected at its forward edge to the rearward edge of the forward portion. The rearward portion includes at least one bracket secured adjacent the forward edge thereof.

At least one tie member is connected at a rearward end to the bracket and adapted to connect at a forward end to the dump body at a point disposed forwardly of the pivotal connection of the rearward portion to the forward portion when installed thereon.

At least one guide member mounted on the articulated cover in substantially vertical alignment with and elevationally below a portion of the at least one tie member.

In the open position the forward portion is tilted forwardly beyond a vertical position, when installed and operated, an amount sufficient to provide loading access to substantially all of the open top of the container portion.

### In the accompanying drawings:

Figure 1 is a plan side view of a rear portion of an articulated truck incorporating the present invention;
Figure 2 is a top plan view of the articulated truck of Figure 1 and incorporating the present invention;
Figure 3 is a view taken along line 3 - 3 of Figure 1 and showing certain elements of the present invention;
Figure 4 is a side view similar to Figure 1 with certain elements of the invention shown in various operated positions;
Figure 5 is a side view similar to Figure 1 with certain elements of the present invention shown in a different operating position;
Figure 6 is an enlarged fragmentary view taken along line 6-6 of Figure 2 showing certain details of the present invention; and
Figure 7 is a cross-sectional view taken along line 7-7 from Figure 6 and showing additional details of that portion of the present invention.

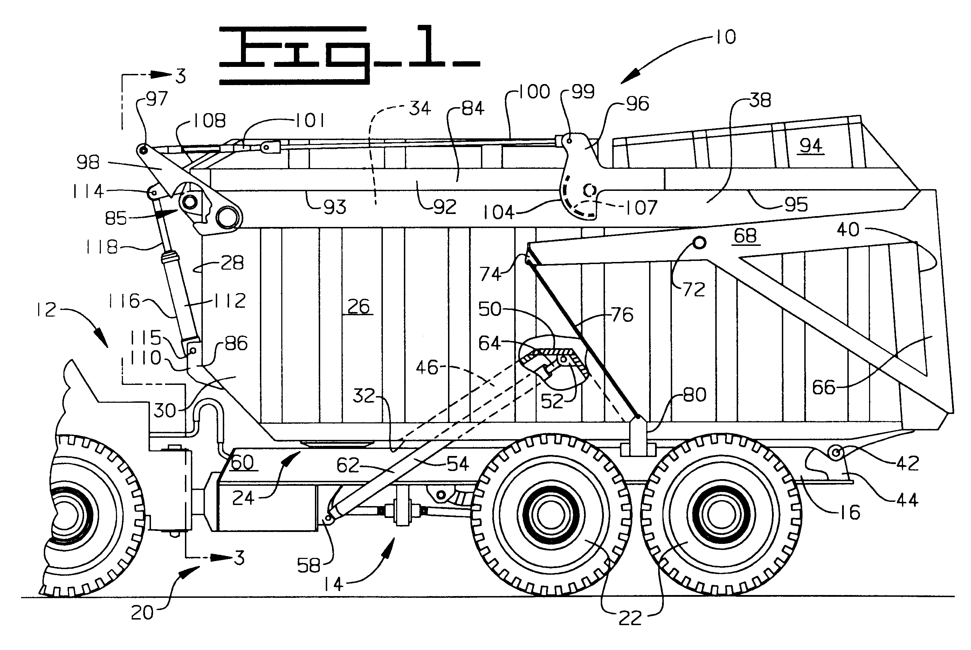

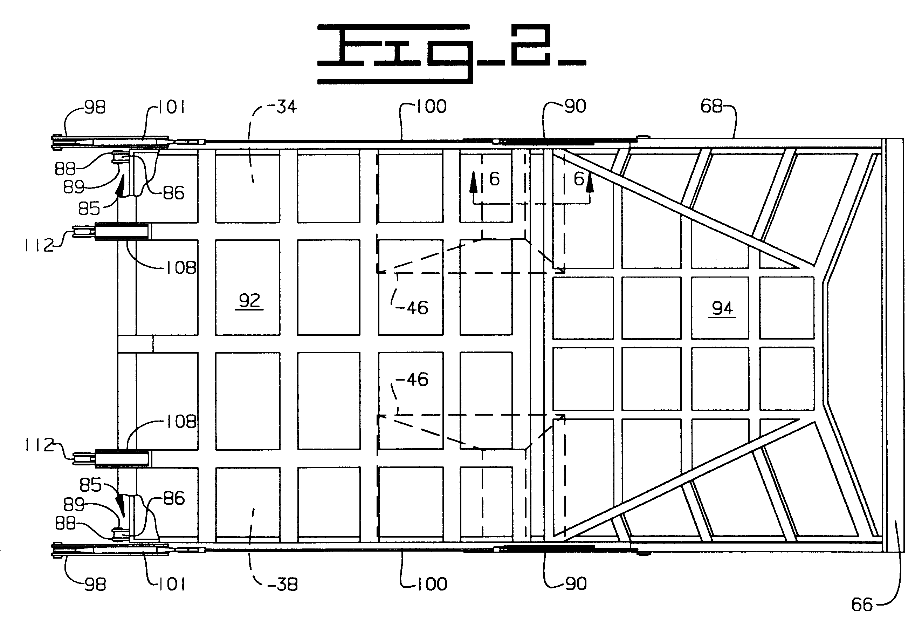

Referring to the drawings, and particularly to Figure 1, an articulated truck or mobile transporter 10 is illustrated including a tractor portion 12, a fragmentary portion of which is shown, and a rear hauling portion 14 including a frame 16 extending longitudinally rearwardly from a steering and articulation joint 20 of conventional design. Tandem wheels 22 are conventionally provided on each side of the frame for supporting and propelling the truck 10.

The tractor portion 12 is related to the invention only to the extent it provides an operators station and a control mechanism for operation of the truck components, therefore, only a fragmentary portion is shown in the drawings.

A dumping body 24 includes a container portion 26 having a generally upstanding front wall 28, a pair of laterally spaced side walls 30 and a bottom wall 32. The side walls 30 are secured to the lateral edges of the bottom and front walls 32,28 in generally upstanding relation thereto, to define a load holding compartment 34. The upper edges of the front wall and the spaced side walls define a top opening 38 while the rearward edges of the side walls 30 and the bottom wall 32 define a rear opening 40.

The container portion is conventionally, pivotally connected at 42, adjacent its rearward end, to an appropriate bracket 44, in this instance a pair of brackets 44, disposed adjacent to a rearward end of and secured to the frame 16. Although the container portion is disclosed and described as a portion of a rear dumping, hauling body it to be understood that the hauling body may be of the side or bottom dumping type or may utilize an ejector for discharge of the material therefrom.

The bottom wall 32 includes a pair of laterally spaced openings 46 each of which are covered by a box like structure 50 including a pair of mounting brackets 52. A pair of body lift cylinders 54 are each pivotally connected at one end to one of a pair of brackets 58 secured to a forward portion 60 of the frame 16. The lift cylinders also extend rearwardly, upwardly and outwardly into the box like structures where they are each pivotally connected to one of the mounting brackets 52. The lift cylinders each include a tubular cylinder portion 62 and a rod portion 64 telescopically mounted in the cylinder portion such that extension of the rod raises the body 24 to a dumping position and retraction of the rod lowers the body to a loading and carrying position.

A tailgate 66 is disposed in closing relation to the rear opening 40 of the container portion and includes a pair of arms 68 disposed, in this embodiment, laterally outwardly of the sidewalls and extending forwardly therealong. Each of the arms 68 are pivotally connected, intermediate its ends, to the respective one of the side walls by a pivot pin 72. A pair of brackets 74 are each secured adjacent the forward end of one of the arms 68. A pair of restraint members 76, such as fixed length cables or chains, are individually connected to one of the brackets 74 adjacent the forward end of each of the arms 68. The restraint members 76 extend rearwardly and downwardly and are connected to a pair of brackets 80 secured to and extending outwardly and upwardly from the frame 16.

An articulated cover 84 is disposed in covering relation to the top opening of the container portion 26. Means 85 are provided for pivotally connecting the articulated cover to the container portion of the hauling body adjacent the upper edge of the front wall thereof. The means 85 for connecting includes an at least one bracket 86, in this embodiment a pair of brackets 86, secured to the upper front face of the front wall 28. The means 85 for connecting also includes an at least one bracket, in this embodiment a pair of brackets 88, secured to the forward edge of the articulated cover 84 for mating engagement with the brackets 86. Also included are a pair of pins 89 which pivotally connects the brackets 86 and 88 to pivotally mount the cover to the container portion.

The articulated cover 84 includes a forward portion 92 and a rearward portion 94 having inner surfaces 93 and 95 respectively with the forward edge of rearward portion being pivotally connected at 97 to the rear edge of the forward portion. The relative lengths of the forward and rearward portions of the cover to the overall length of the cover should preferably be 50 - 70% for the forward portion and 30 - 50% for the rearward portion. In a preferred arrangement, as illustrated, the relationship is 60\40 with the forward portion being the longest.

The rearward portion 94 of the cover includes an at least one bracket 96, in this embodiment a pair of spaced brackets 96, secured along the outer edge thereof. An at least one bracket 98, in this embodiment a pair of laterally spaced brackets 98, are individually secured to the upper, forward corners of the spaced side walls in substantially longitudinal alignment with the spaced brackets 96.

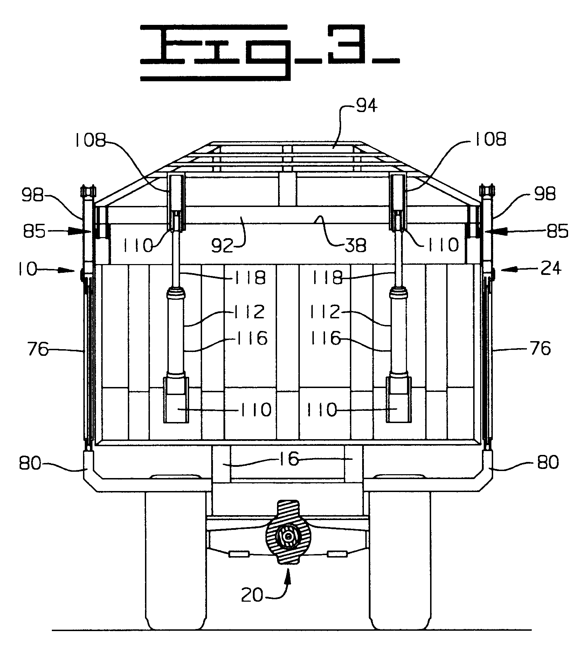

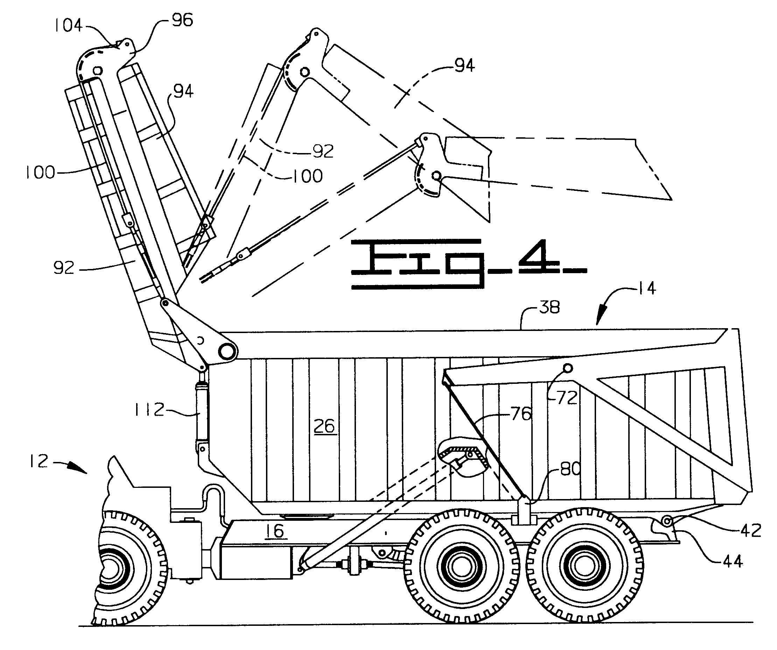

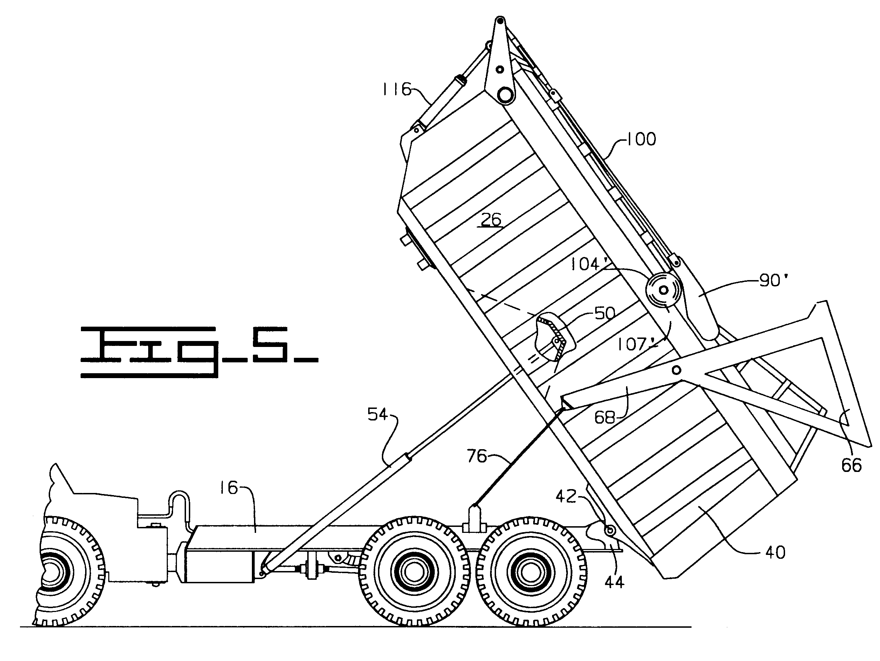

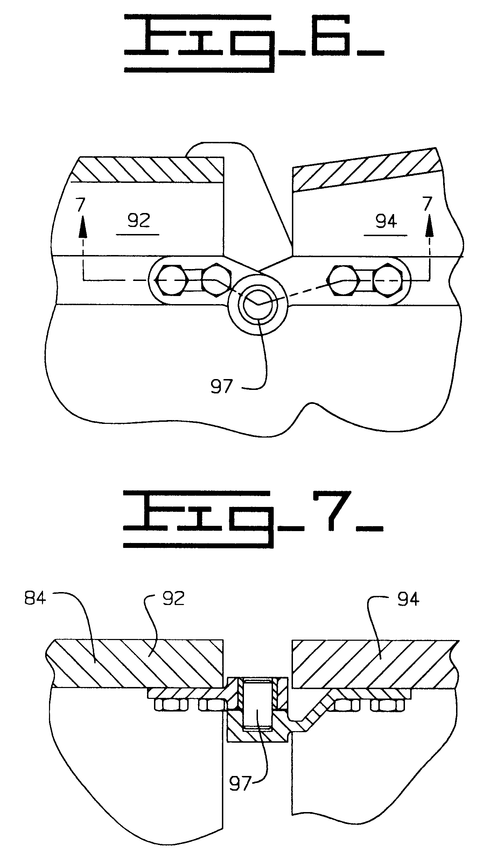

An at least one tie member 100, in this embodiment a pair of elongate tie members 100, are individually connected, by adjustable turn-buckles 101, at one end to the respective one of the brackets 98 and at the other end to the respective one of the brackets 96 by pins 97 and 99 respectively. An at least one guide member, in this embodiment a pair of guide members 104, are individually incorporated as part of the structure of the pair of brackets 96. The guide members are mounted in substantially vertical alignment with the tie members 100 and each have a part cylindrical, or other suitable shape, outer surface 107. Figure 5 shows an alternate embodiment in which a bracket 90' is secured to the rearward portion 94 of the cover and the guide member includes a separately mounted reel 104' also mounted to the rearward portion 94 of the cover adjacent the pivotal connection of the forward and rearward portions of the cover. It is also recognized that a single set of the brackets 96-98, a single tie member 100 and a single reel or guide member 104 may be used.

A pair of brackets 108 are secured in spaced relation along the forward edge of the forward portion of the articulated cover 84 and extend forwardly thereof. A complimentary pair of laterally spaced brackets 110 are mounted on the front face of the front wall 28 of the container portion 26 in substantial alignment with and elevationally spaced from the brackets 108. A pair of hydraulic cylinders 112 are individually connected at an upper end to the brackets 108 by a pair of pins 114 and at a lower end to the brackets 110 by a pair of pins 115. The hydraulic cylinders include a tubular cylinder 116 and a piston rod 118 telescopically mounted in the tubular cylinder.

Retraction of the rods 118 is effective to raise the articulated cover 84 for loading of material through the top opening of the container portion. Extension of the piston rod 118 is effective to lower the cover 84 to a closed position for carrying and dumping of the material from the container portion.

### Industrial Applicability

In use the truck/transporter 10 is spotted to receive the material by loading through the top opening of the container portion 26. The operator then actuates an appropriate control (not shown) to communicate a suitable fluid, in this instance hydraulic fluid, to the rod or upper end of the hydraulic cylinders to retract the rods 118 and rotate the cover from the closed position to a fully open position to allow access to the load holding compartment 34 for deposit of the material therein. As the cover rotates about the pins 89 the rearward portion 94 is free to rotate downward by gravity.

When the cover 84 is fully open, the inner face 95 of the rearward portion 94 substantially contacts the inner face 93 of the forward portion 92. As a result the height of the articulated cover 84 is in the range of 50 to 70% of the total length of the articulated cover and in a preferred embodiment is substantially 60% of the total length of the cover. This arrangement reduces the possibility of bulldozing any material lying on the top edges of the container sidewalls. This also minimizes any change in the location of the center of gravity of the truck\transporter to minimize any adverse effect on the stability of the truck.

As the rearward portion 94 folds downward toward its fully collapsed position the tie members 100 move into contact with the cylindrical outer surfaces 107 of the guide members 104 to condition the tie members to a taut condition, for purposes as will be later explained. In a preferred embodiment, the cover, in its fully open position, is tilted forwardly beyond a vertical position to position the rearward portion such that the open top of the container portion is substantially fully exposed to maximize the use of the body volume.

When the load holding compartment 34 is loaded to the desired amount the operator again actuates the control to lower the articulated cover 84 toward its closed position. As the cover 84 pivots rearwardly toward its closed position the location of the connecting pins 97 for the tie members above and forward of the pivot pins 89 and the tautness of the tie members 100 causes the tie members 100 to pivot the rearward portion of the cover rearwardly to the extended position to cover the rear portion of the container portion 26. The rearward portion is fully extended when the cover touches the upper edges of the container sidewalls. As the rearward portion 94 reaches its fully extended position and closes against the upper edges of the sidewalls the tie members 100 assume a slightly relaxed condition. With the articulated cover closed the operator may begin transit to the dumping location.

Upon arrival at the dump site the operator may actuate a control to direct hydraulic fluid to the to the body lift cylinders 54. The fluid is directed to the head or lower end of the cylinders 54 to extend the rod portion 64 which raises the dump body 24 about the pivotal connection 42. As the dump body pivots relative to the frame 16 the restraint members 76 causes the tailgate to be pivoted upwardly to open the rear opening of the container portion 26. The pivoting of the dump body and simultaneous opening of the tailgate allows the material in the load holding compartment 34 to be discharged through the rear opening 40 of the dump body. Although the opening of the tailgate is shown and described as occurring automatically, it should be understood that it could be opened under independent control of the operator. This could be accomplished by providing power means such as hydraulic cylinders attached between the arms 68 and an appropriate location on the container portion 26.

Since the material in the dump body is discharged through the rear opening the articulated cover 84 may remain in the closed position to again minimize any change in the center of gravity of the truck 10 while the dump body 24 is in the raised position. This is particularly important since it is common in the industry to dump while the truck is moving to distribute the material over a large area. This allows the truck to maintain maximum stability while the dump body is in the raised position.

In view of the forgoing, it is readily apparent that the structure of the present invention provides an articulated cover which is constructed in a manner to minimize deleterious changes in the center of gravity of a truck or transporter during various phases of operation. The invention also prevents or minimizes undesirable loss of the material from the truck during transport from the loading site to the desired dump site. In a preferred embodiment, the cover is pivoted forwardly an amount sufficient to provide loading access to substantially all of the open top of the container portion of the hauling body.

Other aspects, objects and advantages of this invention can be obtained from a study of the drawings, the disclosure and the appended claims.

## Claims

1. An articulated cover (84) adapted for pivotal connection (42) on a top loading, hauling body (24),
means (85) for pivotally connecting the articulated cover (84) to the hauling body (24) for pivoting between open and closed positions when installed thereon,
the articulated cover (84) includes a forward portion (92) having an inner surface (93), a rearward portion (94) having an inner surface (95) and being pivotally connected at its forward edge to the rearward edge of the forward portion (92), the rearward portion (94) including at least one bracket (96) secured adjacent the forward edge thereof,
an at least one tie member (100) connected at a rearward end to the at least one bracket (96) and adapted to connect at a forward end to the hauling body (24) at a point disposed forwardly of the pivotal connection (97) of the rearward portion (94) to the forward portion (92) when installed thereon,
an at least one guide member (104) mounted on the articulated cover (84) in substantially vertical alignment with and elevationally below a portion of the at least one tie member (100); characterized in that,
in the open position the forward portion (92) is tilted forwardly beyond a vertical position, when installed and operated, an amount sufficient to provide loading access to substantially all of the open top (38) of the container portion (26).

2. The articulated cover (84) of claim 1 including means (85) for pivoting the articulated cover (84) between open and closed positions, when installed on the container portion (26), and including means for tilting at least a substantial portion of the cover (84) beyond its pivotal connection to the container portion (26).

3. The articulated cover (84) of claim 2 wherein the at least one guide member (104) is an integral portion of the at least one bracket (96).

4. The articulated cover (84) of claim 3 wherein the integral at least one bracket (96) and at least one guide member (104) includes a pair of laterally spaced integral brackets (96) and guide members (104).

5. The articulated cover (84) of claim 4 wherein the at least one tie member (100) includes a pair of laterally spaced tie members (100) each having a portion thereof individually disposed in substantially vertical alignment with and elevationally above the respective one of the integral guide members (104).
